# EUROPEAN PATENT APPLICATION

(11) **EP 4 683 181 A1**
(43) Date of publication of application: **21.01.2026**
(21) Application number: 25190248.2
(22) Date of filing: 17.07.2025
(51) Int. Cl.: H02K 5/20, H02K 9/19, H02K 9/197

(54) **ELECTRIC MOTOR FOR A MOTOR VEHICLE**

(30) Priority: 19.07.2024 IT 202400016771
(71) Applicant: FERRARI S.p.A., 41100 Modena (IT)
(72) Inventor: CRIVELLARO, Denis, 41100 MODENA (IT); DELLA FORNACE, Enrico, 41100 MODENA (IT); FAVERZANI, Paolo, 41100 MODENA (IT); FERRARA, Davide, 41100 MODENA (IT)
(74) Representative: Studio Torta S.p.A.

(57) **Abstract**

An electric motor (2) for a motor vehicle (1), comprising a stator (3), which is fixed relative to an axis (A); a rotor (4), which can rotate around the axis (A) relative to the stator (3); a casing (30) housing the rotor (4) and the stator (3); a cooling circuit (50), through which a heat transfer fluid can flow and which is thermally coupled to the stator (4) to remove heat from it; the cooling circuit (50) comprises, in turn, an inlet mouth (51) defined by the casing (30) and crossed by the fluid having a first temperature; and an outlet mouth (52) crossed by the fluid having a second temperature higher than the first temperature; the cooling circuit (30) further comprises, proceeding from said inlet mouth (51) towards said outlet mouth (52): a first branch (55) delimited between the casing (30) and the stator (3); and a second branch (56) going through the stator (3).

## Description

### CROSS-REFERENCE TO RELATED APPLICATIONS

This patent application claims priority from Italian patent application no. 102024000016771 filed on July 19, 2024, the entire disclosure of which is incorporated herein by reference.

### TECHNICAL FIELD

The invention relates to an electric motor for a motor vehicle.

### BACKGROUND

Electric or hybrid vehicles are known, which comprise an electric motor with permanent magnets.

Briefly stated, the permanent magnet electric motor comprises, in turn:
- a casing;
- a stator provided with electrically powered electric windings to form a rotary magnetic field; and
- a rotor mounted in a rotary manner relative to the stator around an axis of its, provided with permanent magnets and subjected to a torque around an axis of its following the supply of alternating current to the electric windings.

The stator and rotor are housed inside the casing.

In a known manner, the stator coaxially houses the rotor and is mounted through interference against a radially inner surface of the casing.

In the industry, there is a need to cool the electric motor, reducing its overall weights and dimensions.

Furthermore, the industry feels the need to increase the torque and power density - namely, the ratio between torque/power and weight - of the electric motor.

Furthermore, the number of components of the electric motor needs to be reduced as much as possible, so as to further contain its weights and dimensions.

In the industry, there is also a need to cool the electric motor, minimizing as much as possible the changes to be made to the rotor, the casing and the stator.

Finally, the industry is aware of the need to cool the electric motor, facilitating as much as possible the methods of installation on a relative axle of the motor vehicle.

### SUMMARY

The object of the invention is to provide an electric motor for a motor vehicle, which is capable of fulfilling at least one of the needs discussed above.

The aforesaid object is reached by the invention, as it relates to an electric motor as defined in claim 1.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a cross section of an electric motor according to the invention; and

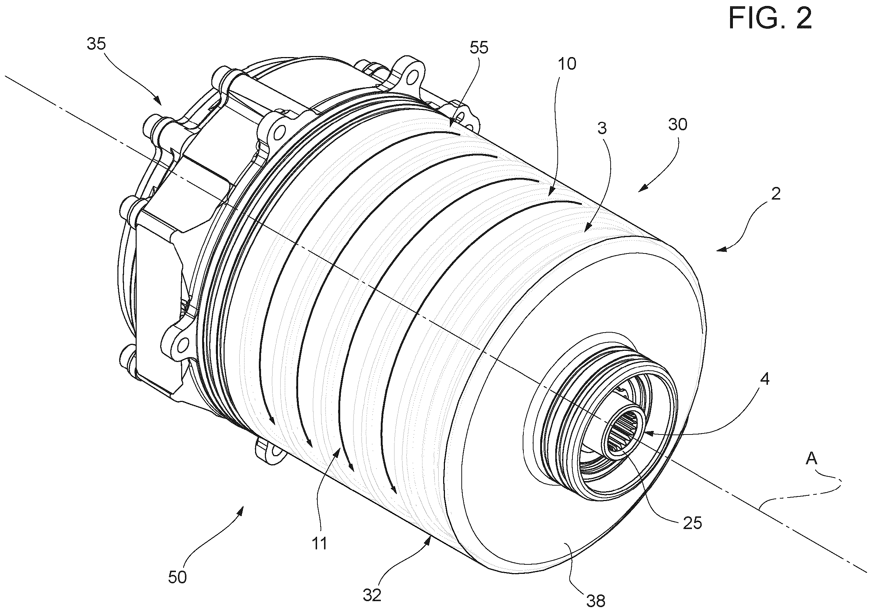

- figure 2 is s a perspective view of first components of the electric motor of figure 1.

### DESCRIPTION OF EMBODIMENTS

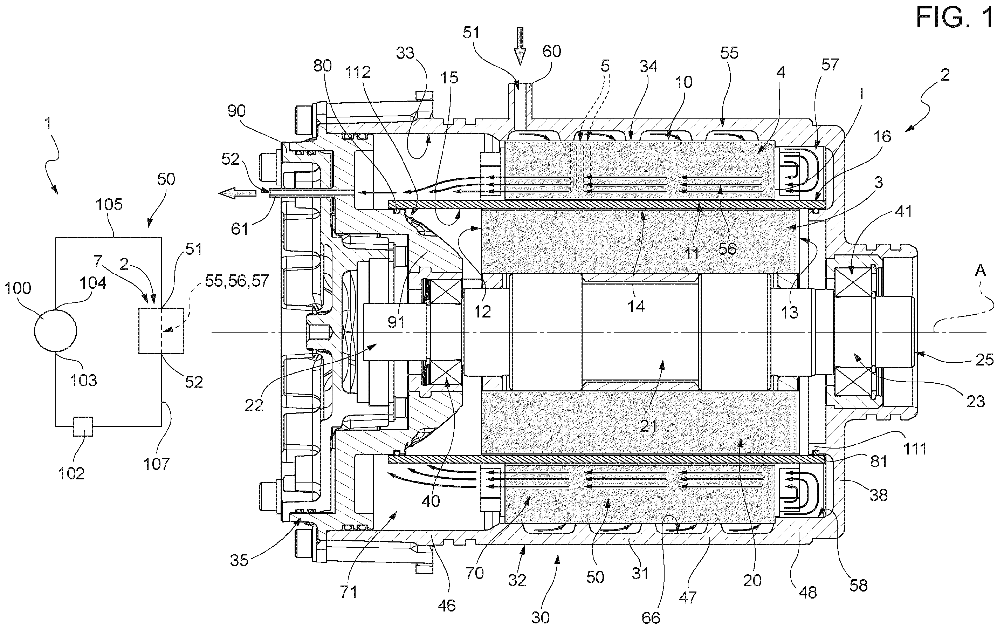

With reference to Figure 1, number 1 indicates an electric or hybrid motor vehicle 1.

The motor vehicle 1 is shown limited to an axle 7 comprising an electric motor 2, an electric motor with permanent magnets in the specific case shown herein.

The electric motor 2 could be operatively connected, preferably by means of relative transmission assemblies, to a pair of wheels (not shown in the attached Figures), preferably front or rear wheels of the motor vehicle.

Alternatively, the axle 7 could comprise two electric motors 2, each operatively connected, preferably by means of a relative transmission assembly, to a relative front or rear wheel (not shown).

More in detail, the electric motor 2 basically comprises:
- a stator 3, which is fixed relative to an axis A; and
- a rotor 4, which can rotate around the axis A relative to the stator 3.

In a known manner, the stator 3 is provided with electric windings 5 electrically powered with an electric current to form a rotary magnetic field.

The rotor 4 is provided with permanent magnets (not shown in Figure 1) and subjected to a torque around the axis A following the supply of alternating current to the electric windings.

In the specific case shown herein, the stator 3 is tubular with axis A and the rotor 4 is coaxially housed inside the stator 3.

The stator 3 comprises, in turn:
- a pair of rings 10, 11, a radially outer ring and radially inner ring, respectively, relative to the axis A; and
- a pair of head surfaces 12, 13 shaped like circular crowns and defining respective opposite axial ends of the stator 3.

The ring 10 is axially delimited between the head surfaces 12, 13.

The ring 11 comprises, in turn:
- a portion 14 delimited between the surfaces 12, 13; and
- a pair of opposite axial end portions 15, 16, between which the portion 14 extends and which respectively protrude from the corresponding head surfaces 12, 13 in an axial direction.

The rotor 4 is coaxially housed inside the stator 3. The rotor 4 further comprises, in turn:
- a tubular main body 20; and
- a shaft 21 housed inside the main body 20 and provided with a pair of appendages 22, 23 defining respective axial ends of the shaft 21 itself.

The appendage 23 defines a power take-off 25 for a transmission assembly (not shown) and operatively connected to one or more wheels of the motor vehicle 1.

The appendages 22, 23 axially project from the main body 20.

The electric motor 2 further comprises:
- a casing 30 with axis A;
- a cover 35 connected to the casing 30 and also fixed relative to the axis A;
- a rolling bearing 40 radially interposed between the appendage 22 of the shaft 21 and the cover 35; and
- a rolling bearing 41 interposed between the appendage 23 of the shaft 21 and the casing 30.

The casing 30 basically comprises:
- a tubular wall 31 with a predominantly axial development; and
- an axial end flange 38 crossed by the appendage 22.

The bearing 41 is radially interposed between the appendage 22 and the flange 38.

The cover 35 is arranged so as to close the casing 30 in a position axially opposite the flange 38 and is crossed by the appendage 22 of the shaft 20.

The casing 30 and the cover 35 coaxially house the rotor 4.

The stator 3 is mounted through interference inside the casing 30 so as to discharge the reaction torque onto the casing 30 itself.

Advantageously, the electric motor 2 comprises a cooling circuit 50, through which a heat transfer fluid, in particular dielectric oil, can flow and which is thermally coupled to the stator 3 to remove heat from it; the cooling circuit 50 comprises, in turn:
- an inlet mouth 51, which is defined by said casing 30 and is crossed by the oil having a first temperature; and
- an outlet mouth 52, which is crossed by the oil having a second temperature higher than the first temperature;
the cooling circuit 50 further comprises, moving from the inlet mouth 51 towards said outlet mouth 52:
- a first branch 55 delimited between the casing 30 and the stator 3; and
- a second branch 56 going through the stator 3.

The cooling circuit 50 further comprises:
- a duct 60 radial to the axis A, defined by the wall 31 of the casing 30 and delimited by the inlet mouth 51; and
- an axial duct 61 delimited by the outlet mouth 52.

The cooling circuit 50 finally comprises a branch 57, which is fluidly interposed between the branches 55, 56 and along which the heat transfer fluid substantially defines a U-shaped path.

The branch 55 is shaped like a helix coaxial to the axis A.

In particular, the branch 55 is defined by a helical groove 66 radially delimited between the wall 31 in the outer position and the ring 10 of the stator 3 in the inner position.

The wall 31 comprises, in particular:
- a radially outer surface 32, from which the duct 60 originates; and
- a radially inner surface 33, opposite the surface 32 and radially spaced apart from the ring 11.

The surface 33 comprises, in turn:
- a pair of axial end portions 46, 48 radially spaced apart from respective portions 14, 15 of the ring 11, facing the respective portions 14, 15 without the interposition of outer elements and axially staggered relative to the ring 10 of the stator 3; and
- a main portion 47 axially interposed between the end portions 46, 48, radially facing the ring 10 and on which the ring 10 is fitted through interference.

The portion 47 defines, in turn, a helical projection 34 radially protruding from the surface 33 on the side opposite the surface 32 and coupled to the ring 11 through interference and in a fluid-tight manner.

The projection 34 delimits the groove 66 and gives the groove 66 the helical shape.

Therefore, the interference coupling between the projection 34 of the wall 31 of the casing 30 and the ring 11 of the stator 3 ensures not only the locking of the stator 3 around the axis A but also the fluid tightness of the branch 55 of the cooling circuit 50.

The branch 56 comprises, in turn, an inlet section I defined by the surface 13 of the stator.

The branch 56 comprises, moving from the inlet section I towards the duct 61 according to the flowing direction of the heat transfer fluid:
- a segment 70 going through the stator 3, radially delimited between the rings 10, 11 and axially delimited between the head surfaces 13, 12 of the stator 3; and
- a segment 71 radially delimited between the respective portions 46 of the wall 31 of the casing 30 and the end portion 15 of the ring 11 and axially delimited between the head surface 12 and the duct 61.

The segments 70, 71 are annular around the axis A and fluidly connected to one another.

The duct 61 extends in an eccentric position relative to the axis A and is fluidly connected to the segment 71.

The electric motor 2 further comprises a chamber 58, inside which the heat transfer fluid flows along the branch 57.

The chamber 58 is axially delimited between the flange 38 and the head surface 12 of the stator 3 and radially delimited between an end portion 16 of the ring 11 and the wall 48 of the wall 31.

Preferably, the outlet mouth 52 and the duct 61 go through the cover 35 axially opposite the flange 38.

The inlet mouth 51 and the duct 60 are arranged at a first axial distance from the cover 35 and at a second axial distance greater than the first axial distance from the flange 38.

The electric motor 2 further comprises:
- a gasket 80 radially interposed between the cover 35 and the portion 15 of the ring 11 in a position radially internal to the ring 11 so as to ensure the fluid tightness of the branch 56; and
- a gasket 81 radially interposed between the flange 38 and the portion 16 of the ring 11 in a position radially internal to the ring 11 so as to ensure the fluid tightness of the branch 57.

Extremely briefly, the cover 35 comprises, in turn:
- a main body 90, which is arranged so as to axially close the casing 30, is fixed to the wall 31 of the casing 30 and is axially crossed by the duct 61; and
- an appendage 91 with a smaller diameter than the main body 90, which projects from the main body 90 inside the wall 31 and the ring 11 and is radially spaced apart from the ring 11.

The gasket 80 is fixed to an axial abutment 112 of the appendage 91.

The flange 38 further comprises an abutment 111, which projects inside the wall 31 on the side opposite the appendage 23 and on which the gasket 81 is fixed.

The cooling circuit 50 comprises, in turn, as merely schematically shown in Figure 1:
- a pump 100; and
- a radiator 102.

The pump 100 comprises a suction mouth 103 and a delivery mouth 104 and can be operated to generate the head needed to feed the heat transfer fluid along the cooling circuit 50.

The cooling circuit 50 comprises, in turn, moving from the delivery mouth 104 to the suction mouth 103 according to the flowing direction of the heat transfer fluid:
- a branch 105, which is external to the electric motor 2 and along which the heat transfer fluid flows at a first temperature value;
- the branches 55, 57, 56, which are obtained inside the electric motor 2 and along which the heat transfer fluid removes heat from the stator 4, until it reaches a second temperature value higher than the first temperature value; and
- a branch 107, which is external to the electric motor 2.

The radiator 102 is interposed along the branch 107 and brings the temperature of the heat transfer fluid back from the second value to the first value by means of an exchange of heat with a cold source.

The pump 100 and the radiator 102 are carried by the motor vehicle 1 on the outside of the electric motor 2.

In use, the activation of the electric motor 2 determines the generation of heat in the area of the rotor 4 and the stator 3.

The rotation of the rotor 4 around the axis A makes a given torque and power value available to the power take-off 25.

The heat transfer fluid flows inside the cooling circuit 50, removing heat from the stator 3.

In greater detail, the pump 100 causes the heat transfer fluid to flow inside the cooling circuit 50 according to a direction oriented from the suction mouth 103 to the delivery mouth 104.

The heat transfer fluid flows along the branch 105, which is external to the electric motor 2, at the first temperature value, reaches the inlet mouth 51, flows along the branches 55, 57, 56, which are internal to the electric motor 2, and subtracts heat from the stator 3 until it reaches the second temperature value, which is higher than the first temperature value, flows out the electric motor 2 through the outlet mouth 52 and returns to the pump 100 through the branch 107, which is external to the electric motor 2.

More in detail, the heat transfer fluid flows inside the duct 60 in a radial manner, according to a helical path inside the branch 55, according to a U-shaped path inside the chamber 58 and along the branch 57 and axially flows through the stator 3 along the segment 70 of the branch 56.

Subsequently, the heat transfer fluid flows along the segment 71 external to the stator 3, flows through the duct 61 and flows out along the outlet mouth 52 of the electric motor 2.

The heat transfer fluid flows through the radiator 102 and cools down until it reaches again the first temperature value.

An examination of electric motor 2 according to the invention clearly shows the advantages it makes possible to achieve

In particular, the branch 55 of the cooling duct 50 is delimited between the casing 30 and the stator 3, whereas the branch 56 of the cooling duct 50 goes through the rotor 4.

Therefore, the interference coupling between the projection 34 of the wall 31 of the casing 30 and the ring 11 of the stator 3 can be used not only to lock the the stator 3 around the axis A on the casing 30, but also to ensure the fluid tightness of the branch 55 of the cooling circuit 50.

It is also possible to reduce the need for additional parts, such as gaskets, to ensure the fluid tightness of the branch 55 of the cooling circuit 50, thus reducing the weights and dimensions of the electric motor 2.

This determines a corresponding increase in the torque and power density of the electric motor and further reduces its weight and overall dimensions.

The duct 61 is axially opposite the power take-off 25, whereas the duct 60 is closer to the cover 35 than the power take-off 25.

In this way, the installation of the electric motor 2 on the axle 7 is facilitated.

Thanks to the fact that the first fluid is dielectric oil, there is no risk of short circuits with the electric components of the rotor 4.

Finally, the electric motor 2 according to the invention can be subjected to changes and variations, which, though, do not go beyond the scope of protection set forth in the appended claims.

In particular, the casing 30 could be defined in an integral manner by the axle 7 of the motor vehicle 1. This would lead to a further reduction in the weight and overall dimensions of the electric motor 2, with a consequent increase in the torque and electrical power density.

## Claims

1. An electric motor (2) for a motor vehicle (1), comprising:
- a stator (3), which is fixed relative to an axis (A);
- a rotor (4), which can rotate around said axis (A) relative to said stator (3);
- a casing (30) housing said rotor (4) and stator (3);
**characterized in that** it comprises a cooling circuit (50), through which a heat transfer fluid can flow and which is thermally coupled at least to said stator (4) to remove heat from it;
said cooling circuit (50) comprising, in turn:
- an inlet mouth (51), which is defined by said casing (30) and is crossed by said fluid having, in use, a first temperature; and
- an outlet mouth (52), which is crossed by said fluid having, in use, a second temperature higher than said first temperature;
said cooling circuit (30) further comprising, proceeding from said inlet mouth (51) towards said outlet mouth (52):
- a first branch (55) delimited between said casing (30) and said stator (3); and
- a second branch (56) going through said stator (3).

2. The electric motor according to claim 1, **characterized in that** said inlet mouth (51) is arranged radially relative to said axis (A) and said outlet mouth (52) is arranged axially.

3. The electric motor according to claim 1 or 2, **characterized in that** said first branch (55) is shaped like a helix and is delimited by said casing (30) in a radially outer position relative to said axis (A) and by a first surface (10) of said stator (3) in a radially inner position relative to said axis (A).

4. The electric motor according to any one of the preceding claims, **characterized in that** said first and second branch (55, 56) are coaxial to one another, and **in that** said first branch (55) is arranged radially on the outside of said second branch (56).

5. The electric motor according to any one of the preceding claims, **characterized in that** said cooling circuit (50) comprises an annular chamber (58), which is axially delimited between said casing (30) and a second axial end surface (13) of said stator (3) and is radially delimited between said casing (30) and a radially inner end ring (11) of said stator (3);
said chamber (58) being fluidly interposed between said first and second branch (55, 56).

6. The electric motor according to any one of the preceding claims, **characterized in that** said casing (30) comprises a flange (38) defining a first axial end of the electric motor (2);
said electric motor (2) further comprising a cover (35), which is fixed to said casing (30) on a side axially opposite said flange (38) and defines a second axial end opposite said first end of said electric motor (2);
said rotor (4) comprising a power take-off (25) coaxial to the axis (A) and going through said flange (38);
said outlet mouth (52) going through said cover (35) and being axially opposite said flange (38);
said inlet mouth (51) being arranged at a first axial distance from said cover (35) and at a second axial distance, which is greater than said first axial distance, from said second flange (38).

7. The electric motor according to any one of the claims from 3 to 6, **characterized in that** said casing (30) comprises a projection (34) shaped like a helix, which is coaxial to said axis (A) and protrudes radially and onto which said first surface (10) of said stator (3) is fitted through interference and in a fluid-tight manner;
said projection (34) delimiting said first branch (55).

8. The electric motor according to any one of the claims from 3 to 7, **characterized in that** it further comprises at least one gasket (80, 81) fixed in a radially inner position to a second radial inner end surface (11) of said stator (3) opposite said first surface (10).

9. The electric motor according to any one of the preceding claims, **characterized in that** heat transfer fluid is dielectric oil.

10. A motor vehicle comprising:
- an electric motor (2) according to any one of the preceding claims;
- a pump (100) comprising, in turn, a delivery segment (104) fluidly connected to said first branch (55) and a suction segment (103) fluidly connected to said second branch (56);
- a heat exchanger (102) fluidly interposed between said second branch (56) and said suction segment (103);
said heat exchanger (102) receiving, in use, said heat transfer fluid at said second temperature and delivering, in use, said heat transfer fluid at said first;
said pump (100) and said heat exchanger (102) being arranged on the outside of said electric motor (2).

11. The motor vehicle according to claim 9, **characterized in that** it comprises an axle (7) defining said casing (30).
